# EUROPEAN PATENT APPLICATION

(11) **EP 4 428 876 A1**
(43) Date of publication of application: **11.09.2024**
(21) Application number: 22888713.9
(22) Date of filing: 11.01.2022
(51) Int. Cl.: G21C 1/32, G21C 19/30, G21C 15/12

(54) **NUCLEAR REACTION DEVICE AND PURIFICATION SYSTEM**

(30) Priority: 05.11.2021 CN 202111308612
(71) Applicant: China Nuclear Power Technology Research Institute Co., Ltd., Shenzhen, Guangdong 518031 (CN); China General Nuclear Power Corporation, Shenzhen, Guangdong 518029 (CN); CGN Power Co., Ltd, Shenzhen Guangdong 518029 (CN)
(72) Inventor: LIANG, Huo, Shenzhen, Guangdong 518031 (CN); YANG, Jiang, Shenzhen, Guangdong 518031 (CN); SHEN, Yonggang, Shenzhen, Guangdong 518031 (CN); CHEN, Yichen, Shenzhen, Guangdong 518031 (CN); LIU, Jianchang, Shenzhen, Guangdong 518031 (CN); LU, Changdong, Shenzhen, Guangdong 518031 (CN); LIU, Zhonghao, Shenzhen, Guangdong 518031 (CN); CHEN, Yunyin, Shenzhen, Guangdong 518031 (CN); CUI, Xuyang, Shenzhen, Guangdong 518031 (CN); JI, Wenying, Shenzhen, Guangdong 518031 (CN); BAO, Xiaoli, Shenzhen, Guangdong 518031 (CN); WANG, Xianmao, Shenzhen, Guangdong 518031 (CN); OUYANG, Yong, Shenzhen, Guangdong 518031 (CN); LU, Xianghui, Shenzhen, Guangdong 518031 (CN); LIU, Jinlin, Shenzhen, Guangdong 518031 (CN)
(74) Representative: Noble, Nicholas
(86) International application number: PCT/CN2022/071393
(87) International publication number: WO 2023/077672

(57) **Abstract**

A nuclear reaction device and a purification system. The nuclear reaction device comprises: a reaction vessel (100) provided with a reaction chamber (110) and a top cover (120) for sealing the reaction chamber (110); a reaction module (200) arranged in the reaction chamber (110), wherein the reaction module (200) reacts in the reaction chamber (110) and releases heat; a heat exchange module (300) arranged in the reaction chamber (110), wherein the heat exchange module (300) can absorb the heat released by the reaction module (200), an inlet of the heat exchange module (300) is configured to be in communication with a liquid supply system, and an outlet of the heat exchange module (300) is configured to be in communication with a thermally driven system.

## Description

### CROSS-REFERENCE TO RELATED APPLICATIONS

This application claims priority of Chinese Patent Application No. 202111308612.3, filed on November 5, 2021, entitled "NUCLEAR REACTION DEVICE AND PURIFICATION SYSTEM", the entire content of which is incorporated herein in its entirety.

### TECHNICAL FIELD

The present application relates to the technical field of nuclear reactions, and in particular to a nuclear reaction device and a purification system.

### BACKGROUND

In nuclear reaction applications, at least two aspects need to be taken into account: heat exchange and hazards of radioactive elements. The conventional nuclear reactors mostly adopt an external heat exchange mode, that is, a reactor and a heat exchange module are arranged separately, which leads to a large design volume of the reactor and does not conform to the miniaturization design concept of the reactor. In addition, the external heat exchange mode also has the problem of reduced heat exchange utilization rate. On the other hand, since there are radioactive elements in the coolant of the nuclear reactor, it is necessary to maintain the radioactive elements in the coolant at a low level to reduce the harm to staff and improve the safety of the reactor.

### SUMMARY

According to various exemplary embodiments of the present application, it is necessary to provide a nuclear reaction device and a purification system including the nuclear reaction device, in order to address the problem of external heat exchange modules in conventional nuclear reactors.

A nuclear reaction device includes:
a reaction container provided with a reaction cavity and a top cover configured to seal the reaction cavity;
a reaction module provided in the reaction cavity, the reaction module being configured to react in the reaction cavity and release heat; and
a heat exchange module provided in the reaction cavity and capable of absorbing the heat released by the reaction module, an inlet of the heat exchange module being configured to be in communication with a liquid supply system, and an outlet of the heat exchange module being configured to be in communication with a thermal driven system.

According to the aforementioned nuclear reaction device, the heat exchange module is accommodated in the reaction cavity of the reaction container to utilize an internal space of the reaction container, so that the overall volume of the nuclear reaction device is reduced, and more in line with the design scheme of miniaturization of the nuclear reaction device. The reaction module may be a nuclear reaction module, and the nuclear reaction module releases heat during the reaction process. Since both the heat exchange module and the reaction module are located in the reaction container, the heat released by the reaction module can be directly absorbed by the heat exchange module, and the heat absorption rate is high. Compared with an external-type heat exchange module, the nuclear reaction device can also improve the heat exchange utilization rate of the reaction module.

In one of the embodiments, the heat exchange module includes at least one set of heat exchange tube bundle, an inlet of each set of heat exchange tube bundle is configured to be in communication with the liquid supply system, and an outlet of each set of heat exchange tube bundle is configured to be in communication with the thermal driven system.

In one of the embodiments, the heat exchange tube bundle is spirally wound around an outer wall of the reaction module.

In one of the embodiments, a plurality of sets of the heat exchange tube bundles are arranged circumferentially along an outer wall of the reaction module.

In one of the embodiments, the nuclear reaction device further includes a positioning plate fixedly provided on the outer wall of the reaction module, the positioning plate is provided with positioning holes having the same number as the number of the heat exchange tube bundles, so as to fix the plurality of sets of the heat exchange tube bundles, respectively.

In one of the embodiments, the nuclear reaction device further includes a fixing assembly provided on the top cover, wherein the reaction module is located in the fixing assembly, the positioning plate is fixed by the fixing assembly, and the heat exchange tube bundles are provided on an outer wall of the fixing assembly.

In one of the embodiments, the fixing assembly includes a hanging basket and a flange, the hanging basket is fixed on the top cover by the flange, the reaction module is located in the hanging basket, an outer wall of the hanging basket is provided with a connecting member to fix the positioning plate, and the heat exchange tube bundle is provided on the outer wall of the hanging basket.

In one of the embodiments, the reaction cavity is filled with a coolant, a side of the hanging basket away from the top cover is provided with a lower seal, the lower seal is provided with a first flow distribution hole, and the first flow distribution hole are in communication with the reaction cavity and the hanging basket;
the nuclear reaction device further includes a coolant circulation module that drives the coolant in the reaction container to the positioning plate, and the positioning plate is provided with a plurality of second flow distribution holes through which the coolant flows.

In one of the embodiments, the reaction module includes a reactor core provided in the hanging basket, a control rod assembly configured to react with the reactor core, and a driving mechanism configured to drive the control rod assembly to move.

A purification system includes the nuclear reaction device, a first purification module, and a second purification module;
the first purification module is in communication with the nuclear reaction device and is configured to accommodate and circulate the coolant of the nuclear reaction device;
the second purification module is in circulation communication with the first purification module, and the second purification module aerates the first purification module and purifies fluid in the first purification module.

In one of the embodiments, the first purification module includes a mixing tank and a settling tank in communication with each other;
the mixing tank and the settling tank are in communication with the nuclear reaction device, respectively, the coolant of the nuclear reaction device is capable of flowing into the mixing tank and flowing into the nuclear reaction device from the settling tank, and an aeration inlet and an aeration outlet of the mixing tank are in communication with the second purification module, respectively.

In one of the embodiments, the mixing tank is provided with a gas jet device in communication with the aeration inlet of the mixing tank.

In one of the embodiments, the gas jet device includes a plurality of circular pipes concentrically arranged, a communication pipe connecting the plurality of circular pipes, and a gas inlet main pipe in communication with the communication pipe, the gas inlet main pipe is in communication with the aeration inlet of the mixing tank, and each circular pipe is provided with a plurality of nozzles.

In one of the embodiments, the settling tank is shaped as a tank body with two hemispherical ends and a cylindrical middle portion.

In one of the embodiments, at least one circular orifice plate and a plurality of half-moon-shaped orifice plates are provided in the settling tank.

In one of the embodiments, the second purification module includes at least one group of filtration device.

In one of the embodiments, the first purification module further includes a downflow pipeline in communication with the nuclear reaction device and the mixing tank, a transferring pipeline and a balancing pipeline are provided between the mixing tank and the settling tank, the settling tank and the nuclear reaction device are in communication with each other through an upper flushing pipeline, and the upper flushing pipeline is provided with an upper flushing pump.

In one of the embodiments, a pressure sensor is provided in the mixing tank, the pressure sensor is capable of calculating a liquid level of the mixing tank according to a pressure in the mixing tank, and the pressure sensor is electrically connected to a main control room.

In one of the embodiments, the second purification module further includes a purification pipeline in communication with the aeration outlet of the mixing tank and an inlet of the filtration device, and an outlet of the filtration device is in communication with an inlet of the first circulation pipeline;
the first circulation pipeline is provided with a gas compression pump, an outlet of the first circulation pipeline is in communication with the aeration inlet of the mixing tank through a second circulation pipeline and is in communication with a gas recovery tank through a gas return pipeline, and the gas recovery tank replenishes gas to the first circulation pipeline through a gas replenishment pipeline.

In one of the embodiments, the second purification module further includes a gas cavity downflow pipe in communication with the nuclear reaction device and the inlet of the filtration device, and a gas cavity upper flushing pipe is further provided between the outlet of the first circulation pipeline and the nuclear reaction device.

### BRIEF DESCRIPTION OF THE DRAWINGS

In order to illustrate the embodiments of the present disclosure more clearly, the drawings used in the embodiments will be described briefly. Apparently, the following described drawings are merely for the embodiments of the present disclosure, and other drawings can be derived by those of ordinary skill in the art without any creative effort.
FIG. 1 is a schematic view of a nuclear reaction device according to an embodiment of the present application.
FIG. 2 is a schematic view of a heat exchange module according to an embodiment of the present application.
FIG. 3 is a schematic view of a heat exchange module according to another embodiment of the present application.
FIG. 4 is a schematic view of a positioning plate according to an embodiment of the present application.
FIG. 5 is a schematic view of a nuclear reaction device according to another embodiment of the present application.
FIG. 6 is a schematic view of a basket according to an embodiment of the present application.
FIG. 7 is a schematic view of a flow guiding assembly according to an embodiment of the present application.
FIG. 8 is a top view of the flow guiding assembly of FIG. 7.
FIG. 9 is a schematic view of a purification system according to an embodiment of the present application.
FIG. 10 is a schematic view of a circular orifice plate according to an embodiment of the present application.
FIG. 11 is a schematic view of a gas jet device according to an embodiment of the present application.
FIG. 12 is a schematic view of the gas jet device of FIG. 11 viewed from another aspect.
FIG. 13 is a schematic view of a purification system according to another embodiment of the present application.

### Description of reference signs:

100. Reaction container; 110. Reaction cavity; 120. Top cover; 130. Isolation tank; 131. Isolation plate;
200. Reaction module; 210. Reactor core; 220. Control rod assembly; 230. Driving mechanism;
300. Heat exchange module; 310. Heat exchange tube bundle; 320. Flow guiding assembly; 321. Flow blocking plate;
3211. Receiving hole; 322. Flow guiding cylinder; 3221. Receiving cavity;
400. Positioning plate; 410. Positioning hole; 420. Second flow distribution hole;
500. Fixing assembly; 510. Hanging basket; 511. Connecting member; 520. Flange; 530. Lower seal;
531. First flow distribution hole; 600. Coolant circulation module;
700. First purification module; 710. Mixing tank; 711. Pressure sensor; 720. Settling tank;
730. Gas jet device; 731. Circular pipe;
7311. Nozzle; 732. Communication pipe; 733. Gas inlet main pipe; 740. Circular orifice plate;
741. Flow hole; 750. Downflow pipeline; 751. Downflow flow control valve; 760. Transferring pipeline;
770. Balancing pipeline;
780. Upper flushing pipeline; 781, Upper flushing pump; 782, Upper flushing flow control valve;
800. Second purification module; 810. Filtration device; 811. Isolation valve; 820. Purification pipeline;
830. First circulating pipeline; 831. Gas compression pump; 832. Second flow control valve;
840. Second circulation pipeline; 841. Third flow control valve;
850. Gas return pipeline; 851. Fourth flow control valve; 860. Gas recovery tank;
870. Gas replenishment pipeline; 871. First flow control valve;
880. Gas cavity downflow pipe; 881. Gas cavity downflow isolation valve; 890. Gas cavity upper flushing pipe;
891. Fifth flow control valve.

### DETAILED DESCRIPTION OF THE EMBODIMENTS

In order to make the above objects, features and advantages of the present disclosure clear and easier to understand, the specific embodiments of the present disclosure are described in detail below in combination with the accompanying drawings. Many specific details are set forth in the following description to facilitate a full understanding of the present disclosure. However, the present disclosure can be implemented in many ways different from those described herein, and those skilled in the art can make similar improvements without departing from the connotation of the present disclosure. Therefore, the present disclosure is not limited by the specific embodiments disclosed below.

In the description of the present disclosure, it should be understood that the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential direction" are based on the azimuth or position relationship shown in the attached drawings, which are only for the convenience of describing the present disclosure and simplifying the description, rather than indicating or implying that the device or element must have a specific azimuth, be constructed and operated in a specific azimuth, so such terms cannot be understood as a limitation of the present disclosure.

In addition, the terms "first" and "second" are only used for descriptive purposes and cannot be understood as indicating or implying relative importance or implicitly indicating the number of indicated technical features. Thus, the features defined with "first" and "second" may explicitly or implicitly include at least one of the features. In the description of the present disclosure, "a plurality of' means at least two, such as two, three, etc., unless otherwise expressly and specifically defined.

In the present disclosure, unless otherwise expressly specified and limited, the terms "mount", "connect", "contact", "fix" and other terms should be understood in a broad sense, for example, they can be fixed connections, detachable connections, or integrated. They can be mechanical connection or electrical connection. They can be directly connected or indirectly connected through an intermediate medium. They can be the connection within two elements or the interaction relationship between two elements, unless otherwise expressly limited. For those skilled in the art, the specific meaning of the above terms in the present disclosure can be understood according to the specific situation.

In the present disclosure, unless otherwise expressly specified and limited, the first feature "above" or "below" the second feature may be in direct contact with the first and second features, or the first and second features may be in indirect contact through an intermediate medium. Moreover, the first feature is "above" the second feature, but the first feature is directly above or diagonally above the second feature, or it only means that the horizontal height of the first feature is higher than the second feature. The first feature is "below" of the second feature, which can mean that the first feature is directly below or obliquely below the second feature, or simply that the horizontal height of the first feature is less than that of the second feature.

It should be noted that when an element is called "fixed to" or "provided on" another element, it can be directly on another element or there can be a centered element. When an element is considered to be "connected" to another element, it can be directly connected to another element or there may be intermediate elements at the same time. The terms "vertical", "horizontal", "up", "down", "left", "right" and similar expressions used herein are for the purpose of illustration only and do not represent the only embodiment.

Nuclear reactors can convert chemical energy or nuclear energy into heat to drive related thermal driven system. For example, the nuclear reactor vaporizes water with the released heat to drive a turbine. At least two convenient problems need to be paid attention to when the nuclear reaction device is used for nuclear reaction. The convenient nuclear reactors mostly adopt an external heat exchange mode, that is, a reactor and a heat exchange module are arranged separately, which leads to a large design volume of the reactor and does not conform to the miniaturization design concept of the reactor. In addition, the external heat exchange mode also has the problem of reduced heat exchange utilization rate. On the other hand, since there are radioactive elements in the coolant of the nuclear reactor, it is necessary to maintain the radioactive elements in the coolant at a low level to reduce the harm to staff. Therefore, researchers have proposed a nuclear reaction device, in which both a reaction module and a heat exchange module are accommodated in the nuclear reaction device to reduce the overall volume of the nuclear reaction device. In addition, the invention also provides a purification system, which purifies pollutant elements or harmful elements, etc., that may exist during the reaction process of the nuclear reaction device, so as to reduce pollution and ensure the safety of staff as well as the safety of reactor operation.

The nuclear reaction device provided by the present application may be used in a nuclear reactor process, but is not limited thereto. For example, a chemical exothermic process can also be completed by the nuclear reaction device of the present application.

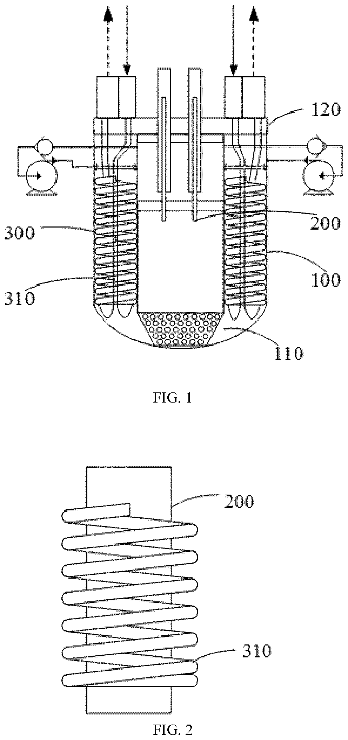

Referring to FIG. 1, FIG. 1 is a schematic view of a nuclear reaction device according to an embodiment of the present application. The nuclear reaction device according to an embodiment of the present application includes a reaction container 100, a reaction module 200, and a heat exchange module 300. The reaction container 100 is configured to accommodate the reaction module 200 and the heat exchange module 300, so that a space occupation ratio of the entire nuclear reaction device is reduced, which is more in line with the design requirements of miniaturization of the nuclear reaction device. In addition, the heat released by the reaction module 200 can be directly used by the heat exchange module 300. In this way, compared with an external-type heat exchange module 300, the nuclear reaction device in this embodiment can also improve the heat exchange utilization rate. The reaction module 200 may be a nuclear reactor, which may include, for example, a reactor core, a control rod assembly, and a driving mechanism to drive the control rod assembly. The reaction module 200 may also be a module that includes chemical element reaction and heat release. The heat exchange module 300 mainly absorbs the heat released by the reaction module 200 during the reaction process, so as to facilitate other driving operations. For example, an inlet of the heat exchange module 300 is configured to be in communication with a liquid supply system. After absorbing the heat, the heat exchange module 300 can vaporize a water source delivered from the liquid supply system, so as to drive a thermal driven system, such as a turbine.

Specifically, the reaction container 100 is provided with a reaction cavity 110 and a top cover 120 sealing the reaction cavity 110, so that the reaction container 100 is a relatively closed space. On the one hand, the top cover 120 can prevent the temperature of the reaction container 100 from dissipating, and on the other hand, the top cover 120 can also prevent contamination elements or radioactive elements in the reaction container 100 from diffusing. The reaction module 200 is provided in the reaction cavity 110, and the reaction module 200 reacts in the reaction cavity 110 and releases heat. The heat exchange module 300 is provided in the reaction cavity 110, the heat exchange module 300 can absorb the heat released by the reaction module 200. The inlet of the heat exchange module 300 is configured to be in communication with the liquid supply system, and an outlet of the heat exchange module 300 is configured to be in communication with the thermal driven system. The heat exchange module 300 may include at least one set of heat exchange tube bundle 310, an inlet of each heat exchange tube bundle 310 is in communication with the liquid supply system, and an outlet of each set of heat exchange tube bundle 310 is in communication with the thermal driven system.

In this embodiment, the reaction module 200 releases heat during operation. After absorbing the heat from the reaction module 200, the heat exchange module 300 can vaporize the water delivered to the heat exchange module 300 in the liquid supply system, and drive the thermal driven system to operate. Since the heat exchange module 300 is accommodated in the reaction cavity 110, the overall volume of the nuclear reaction device is reduced, which is more in line with the design scheme of miniaturization of the nuclear reaction device. The reaction module 200 may be a nuclear reaction module 200, and the nuclear reaction module 200 releases heat during the reaction process. Since both the heat exchange module 300 and the reaction module 200 are located in the reaction container 100, the heat released by the reaction module 200 can be directly absorbed by the heat exchange module 300, and the heat absorption rate is high. Compared with an external-type heat exchange module 300, the nuclear reaction device can also improve the heat exchange utilization rate of the reaction module 200.

In order to improve the utilization rate of the heat exchange module 300, the inventor conceives that the heat exchange module 300 needs to be as close as possible to the reaction module 200, that is, the utilization rate of the heat exchange module 300 can be improved as much as possible by shortening a distance between the heat exchange module 300 and the reaction module 200. Therefore, the heat exchange tube bundle 310 included in the heat exchange module 300 is spirally wound around an outer wall of the reaction module 200, as shown in FIG. 2. Since the heat exchange tube bundle 310 in the heat exchange module 300 is spirally wound around the outer wall of the reaction module 200, the heat exchange tube bundle 310 in the heat exchange module 300 has a large contact area with the outer wall of the reaction module 200, so that the heat exchange tube bundle 310 can better absorb the heat from the reaction module 200. In addition, a water flow supplied by the liquid supply system may enter from a lower portion of the heat exchange tube bundle 310 and then flow out from an upper portion of the heat exchange tube bundle 310. In this embodiment, the lower portion of the heat exchange tube bundle 310 refers to a side thereof adjacent to a bottom wall of the reaction container 100, and the upper portion of the heat exchange tube bundle 310 refers to a side thereof adjacent to the top cover 120. The advantage of such a design is that a flow distance of the water flow in the heat exchange tube bundle 310 can be shortened and the vaporized water vapor can be discharged directly.

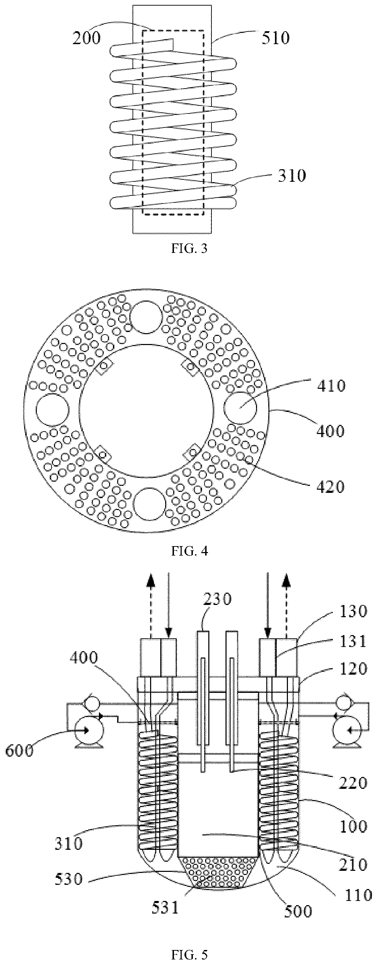

In another embodiment, referring to FIG. 5, the inventor employs a plurality of sets of heat exchange tube bundles 310 arranged circumferentially along the outer wall of the reaction module 200. The difference compared with the previous embodiment lies that the heat exchange tube bundle 310 is provided adjacent to the outer wall of the reaction module 200. A spiral radius of the heat exchange tube bundle 310 is less than a distance between the reaction container 100 and the reaction module 200. The design scheme in this embodiment and the design scheme in the previous embodiment can be selected according to the volume of the reaction cavity 110 of the reaction container 100, etc.

The inventor has found that when a plurality of sets of heat exchange tube bundles 310 are provided in a circumferential direction of the outer wall of the reaction module 200, since the heat exchange tube bundles 310 lack positioning members, it is difficult to fix positions of the heat exchange tube bundles 310. Therefore, the inventor conceives that the positioning plate 400 is provided in the nuclear reaction device, and positioning holes 410 are provided on the positioning plate 400 to fix the heat exchange tube bundle 310. Specifically, referring to FIG. 4 and FIG. 5, the nuclear reaction device further includes the positioning plate 400 fixedly provided on the outer wall of the reaction module 200. The positioning plate 400 is provided with positioning holes 410 having the same number as that of the heat exchange tube bundles 310, so as to respectively fix the plurality of heat exchange tube bundles 310. In this way, after the position of the positioning plate 400 and the position of the reaction module 200 are fixed, the heat exchange tube bundle 310 can be fixed through the positioning hole 410.

After the reaction module 200 and the heat exchange module 300 are both provided in the reaction container 100, in order to prevent the reaction module 200 from moving relative to the heat exchange module 300 during the reaction process, which affects the operating process of the reaction module 200 and the heat exchange module 300, the reaction module 200 is fixed by a fixing assembly 500. Specifically, referring to FIG. 5, the nuclear reaction device further includes the fixing assembly 500 provided on the top cover 120. The reaction module 200 is located in the fixing assembly 500, the positioning plate 400 is fixed by the fixing assembly 500, and the heat exchange tube bundles 310 are provided on an outer wall of the fixing assembly 500. Fixing the reaction module 200 by the fixing assembly 500 can ensure that the position of the reaction module 200 in the reaction container 100 is stable, which further enables the reaction module 200 and the heat exchange module 300 to operate normally. Since the fixing assembly 500 is configured to accommodate the reaction module 200, the heat exchange tube bundle 310 in the heat exchange module 300 may be wound around the outer wall of the fixing assembly 500 or circumferentially provided on the outer wall of the fixing assembly 500.

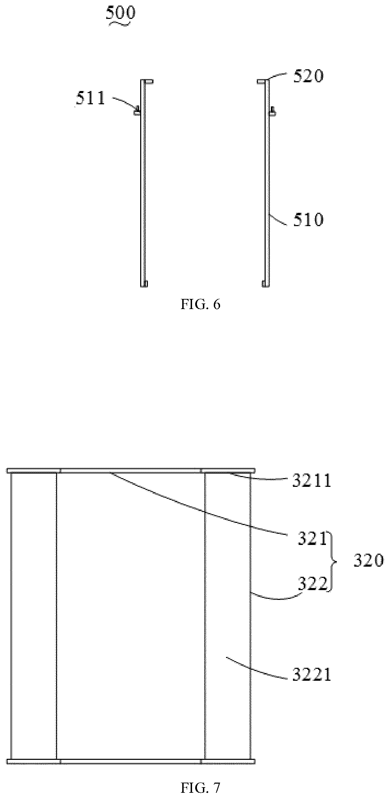

Further, referring to FIG. 5 and FIG. 6, the fixing assembly 500 includes a hanging basket 510 and a flange 520. The hanging basket 510 is fixed on the top cover 120 by the flange 520. The reaction module 200 is located in the hanging basket 510. An outer wall of the hanging basket 510 is provided with a connecting member 511 to fix the positioning plate 400. The connecting member 511 may be a buckle. The heat exchange tube bundle 310 is provided on the outer wall of the hanging basket 510, as shown in FIG. 3. In this embodiment, the hanging basket 510 can be better fixed to the top cover 120 through the flange 520, and a bottom portion of the hanging basket 510 can be supported by a bottom wall of the reaction container 100. In addition, in order to facilitate the arrangement of the heat exchange tube bundle 310, one end of the flange 520 connected to the hanging basket 510 is provided in the hanging basket 510.

In the process of using the nuclear reaction device by the inventor, in order to better absorb the heat of the reaction module 200, for example, when the reaction module 200 is a nuclear reaction, it is necessary to introduce a coolant into the reaction container 100 to dissipate the heat of the reaction in the reaction module 200. The coolant may be a lead-bismuth alloy, etc. In order to enable the coolant to circulate in the reaction container 100 and flow into the nuclear reaction device more evenly to dissipate the heat released by the nuclear reaction device, the inventor proposes a coolant circulation module 600 and a lower seal 530 provided in the reaction container 100. Specifically, as shown in FIG. 5, the reaction cavity 110 of the reaction container 100 is filled with the coolant, and the lower seal 530 is provided on a side of the hanging basket 510 away from the top cover 120. For example, the lower seal 530 may be fixed with the hanging basket 510 or supported by the hanging basket 510 in a snap connection manner. The lower seal 530 is provided with a first flow distribution hole 531. The first flow distribution hole 531 is in communication with the reaction cavity 110 of the reaction container 100 and the hanging basket 510. The coolant can enter the hanging basket 510 from the first flow distribution hole 531. The nuclear reaction device further includes the coolant circulation module 600 that drives the coolant in the reaction container 100 to the positioning plate 400. The positioning plate 400 is provided with a plurality of second flow distribution holes 420 through which the coolant flows. A plurality of coolant circulation modules 600 may be provided.

In this embodiment, the coolant circulation module 600 can drive the coolant in the reaction container 100 to the positioning plate 400. Since the coolant absorbs the heat of the reaction module 200, the coolant can transfer the heat to the heat exchange tube bundle 310 below the positioning plate 400 when the coolant is driven to the positioning plate 400. The positioning plate 400 is provided with the second flow distribution hole 420, so that the flow velocity of the coolant in the positioning plate 400 can be more uniform, and the coolant can better exchange heat with the heat exchange tube bundle 310. After the coolant flows from the positioning plate 400 through the heat exchange tube bundle 310 and enters the lower seal 530, the coolant can re-enter the hanging basket 510 from the first flow distribution hole 531 of the lower seal 530 to absorb the heat from the reaction module 200 again. In this embodiment, the coolant circulation system is illustrated as an example. The coolant circulation system includes a pump and a delivery pipeline. The pump is provided on the delivery pipeline, and the delivery pipeline is in communication with the reaction cavity 110 of the reaction container 100. When the pump operates, the coolant can be drawn into the delivery pipeline and driven to the positioning plate 400. In order to reduce the number of openings between the delivery pipeline and the reaction container 100, the delivery pipeline may be a double-layer pipeline, that is, by providing one opening on the reaction container 100, the coolant can enter and be discharged from the delivery pipeline.

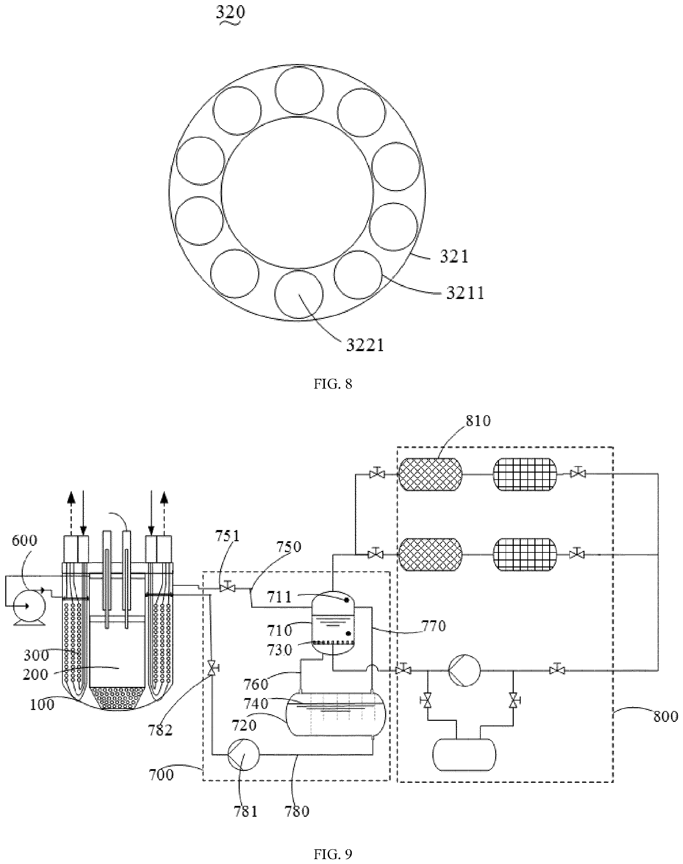

When the heat exchange tube bundles 310 are arranged in the circumferential direction of the outer wall of the hanging basket 510, there may be a gap between adjacent two heat exchange tube bundles 310. When the coolant flows into the heat exchange tube bundles 310, the coolant may flow through the gap between the heat exchange tube bundles 310, which is disadvantage for the coolant to transfer the heat to the heat exchange tube bundles 310. Therefore, the inventor proposes a flow guiding assembly 320 to accommodate the heat exchange tube bundles 310, thereby preventing the coolant from flowing through the gap between the heat exchange tube bundles 310. Specifically, referring to FIG. 7 and FIG. 8, the flow guiding assembly 320 includes flow blocking plates 321 arranged oppositely and flow guiding cylinders 322 located between the flow blocking plates 321. The flow guiding cylinders 322 and the flow blocking plates 321 are sleeved on the outer wall of the hanging basket 510. The flow guiding cylinder 322 is provided with a plurality of receiving cavities 3221 to receive the heat exchange tube bundles. The flow blocking plate 321 is provided with a receiving hole 3211 in communication with the receiving cavity 3221, so that the heat exchange tube bundle 310 can enter the receiving cavity 3221 of the flow guiding cylinder 322. In this embodiment, the flow guiding cylinder 322 and the flow blocking plate 321 can be sleeved on the outer wall of the hanging basket 510 through a through hole, and the heat exchange tube bundle 310 is placed in the receiving cavity 3221 of the flow guiding cylinder 322. When the coolant flows into the heat exchange tube bundle 310, the coolant flows through the receiving cavity 3221 of the guiding cylinder 322. In this way, the coolant can more fully transfer the heat to the heat exchange tube bundle 310, thereby further improving the heat absorption efficiency of the heat exchange tube bundle.

In an embodiment, an isolation tank 130 is provided on a side of the top cover 120 away from the reaction container 100. Referring to FIG. 5, an isolation plate 131 is provided in the isolation tank 130 to divide the isolation tank 130 into a feed water ring tank and a steam ring tank. The feed water ring tank is in communication with the liquid supply system and the inlet of the heat exchange module 300, and the steam ring tank is in communication with the thermal driven system and the outlet of the heat exchange module 300. The isolation tank 130 can better buffer the water flow and the gas flow.

In an embodiment, referring to FIG. 5, when the nuclear reaction device is used in a nuclear reaction process, the reaction module 200 includes a reactor core 210 provided in the hanging basket 510, a control rod assembly 220 configured to react with the reactor core 210, and a driving mechanism 230 configured to drive the control rod assembly 220 to move. The reaction process of the reaction module 200 is that the driving mechanism 230 drives the control rod assembly 220 to move, so that the control rod assembly 220 reacts with the reactor core 210 and releases heat.

The operating principle of this embodiment is that the driving mechanism 230 drives the control rod assembly 220 to move, thereby controlling a power of the reactor core 210 to release heat during nuclear reaction. The liquid supply system conveys water flow to the heat exchange tube bundle 310 of the heat exchange module 300 through the isolation tank 130. The reaction container 100 is filled with coolant, and the coolant can absorb the heat released by the nuclear reaction of the reactor core 210. The coolant circulation module 600 drives the coolant to the positioning plate 400, and further goes through the second flow distribution holes 420 on the positioning plate 400 and the heat exchange module 300, such that the water flow in the heat exchange tube bundle 310 of the heat exchange module 300 absorbs heat and is vaporized. After the water flow of the heat exchange tube bundle 310 vaporizes, the water flow drive the thermal driven system. At the same time, the coolant can flow into the reactor core 210 from the first flow distribution holes 531 of the lower seal 530 to absorb the heat from the reactor core 210 again.

In this embodiment, since the heat exchange module 300 is internally provided, the volume of the entire nuclear reaction device is reduced, which is in line with the design concept of miniaturization of the nuclear reaction device. In addition, since the heat exchange tube bundle 310 of the heat exchange module 300 is spirally wound around the outer wall of the hanging basket 510 or circumferentially arranged on the outer wall of the hanging basket 510, the heat during the nuclear reaction process can be better absorbed. In addition, the second flow distribution holes 420 on the positioning plate 400 enable the flow velocity of the coolant under the positioning plate 400 to be more uniform, so that the heat absorption efficiency of the heat exchange tube bundle 310 can also be improved. Finally, the first flow distribution hole 531 provided on the lower seal 530 can enable the coolant to enter or flow out more uniformly.

Considering that the nuclear reaction device may release pollution elements or radioactive elements during the reaction process, these elements need to be purified. When the nuclear reaction device is used in the nuclear reaction process, since the coolant contains radioactive elements, if the radioactive elements in the coolant are not maintained at a low level, the safety of operators may be jeopardized, and the nuclear reaction process may also be affected. Therefore, the inventor proposes an on-line purification system capable of automatically absorbing the radioactive elements in the coolant during the nuclear reaction. The concept of the present application is to design two purification modules, namely a first purification module 700 and a second purification module 800. The first purification module 700 is configured to accommodate the coolant, and the second purification module 800 is configured to aerate into the first purification module 700, so that the coolant in the first purification module 700 is stirred to release the radioactive element contained in the coolant, and the radioactive element released in the first purification module 700 can enter the second purification module 800 along with the gas flow and be purified by the second purification module 800. It should be noted that the gas aerated by the second purification module 800 to the first purification module 700 may be helium, carbon dioxide, nitrogen, etc., or a mixture of these gases.

Specifically, referring to FIG. 9, the purification system further includes a first purification module 700 and a second purification module 800. The first purification module 700 is in communication with the nuclear reaction device and is configured to accommodate and circulate the coolant of the nuclear reaction device. The second purification module 800 is in circulation communication with the first purification module 700, and the second purification module 800 aerates the first purification module 700 and purifies fluid in the first purification module 700.

In this embodiment, the coolant of the nuclear reaction device can enter the first purification module 700, and the second purification module 800 aerates the first purification module 700, so that the coolant accommodated in the first purification module 700 is stirred, and more radioactive elements are released from the coolant. The radioactive elements released from the coolant can enter the second purification module 800 and be purified by the second purification module 800. It should be noted that at least two communication pipes 732 may be provided between the first purification module 700 and the second purification module 800. One communication pipe 732 is configured to allow the second purification module 800 to aerate to the first purification module 700, and the other communication pipe 732 is configured to allow the gas flow in the first purification module 700 to enter the second purification module 800. In addition, the second purification module 800 may include at least one group of filtration devices 810.

In this embodiment, the first purification module 700 and the second purification module 800 can maintain the radioactive elements of the nuclear reaction device at a relatively low level, the radiation impact of the nuclear reaction device on staff can be reduced, and the nuclear reaction device can operate well.

Further, referring to FIG. 9, the first purification module 700 includes a mixing tank 710 and a settling tank 720 that are in communication with each other. The mixing tank 710 and the settling tank 720 are in communication with the nuclear reaction device, respectively, and the coolant of the nuclear reaction device can flow into the mixing tank 710 and flow into the nuclear reaction device from the settling tank 720. An aeration inlet and the aeration outlet of the mixing tank 710 are in communication with the second purification module 800, respectively, and the second purification module 800 aerates the mixing tank 710 and purifies the gas flow discharged from the mixing tank 710.

In this embodiment, the coolant first enters the mixing tank 710, and then the second purification module 800 aerates the mixing tank 710 through the aeration inlet of the mixing tank 710, so that the coolant in the mixing tank 710 can be fully stirred. At this time, the radioactive element contained in the coolant can enter the second purification module 800 from the aeration outlet of the mixing tank 710 along with the gas flow, so as to be filtered by the second purification module 800. The coolant in the mixing tank 710 is discharged to the settling tank 720 after being stirred. The settling tank 720 is capable of settling the coolant, which is conducive to further precipitation of bubbles in the coolant and reduce the proportion of bubbles in the coolant.

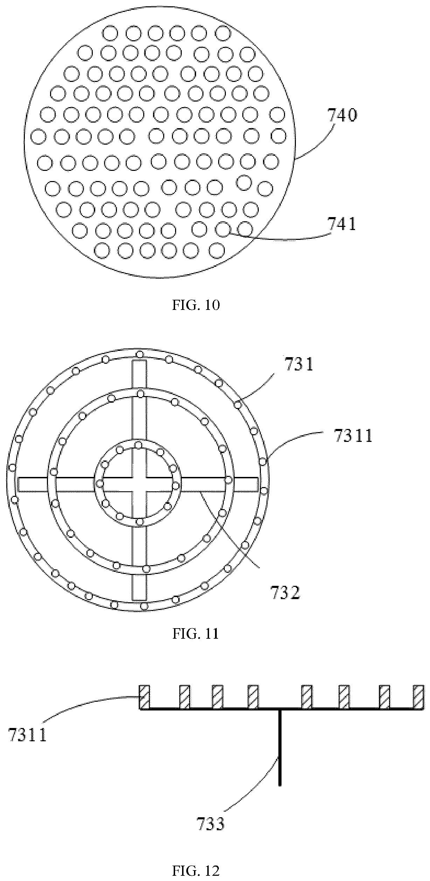

In addition, in order to allow the settling tank 720 to better settle the coolant, at least one circular orifice plate 740 and a plurality of half-moon-shaped orifice plates are provided in the settling tank 720, as shown in FIG. 10. The circular orifice plate 740 has the same size as a cross-sectional area of the settling tank. The circular orifice plate 740 and the half-moon-shaped orifice plate are provided with a plurality of flow holes 741. The circular orifice plate 740 is provided in the static thank 720 and is adjacent to one side of the mixing tank 710, the half-moon-shaped orifice plate is provided at a lower side of the circular orifice plate 740, and the circular orifice plate 740 and the half-moon-shaped orifice plate can be welded to the inner wall of the settling tank 720 by welding, respectively. That is, when the coolant in the mixing tank 710 flows into the settling tank 720, the coolant needs to firstly flow through the circular orifice plate 740 and the half-moon-shaped orifice plate in the settling tank 720. After the coolant flows through the circular orifice plate 740, the flow velocity of the coolant decreases. The half-moon-shaped orifice plate can further inhibit the flow velocity of the coolant, thereby facilitating the floating and precipitation of bubbles in the coolant.

In order to better aerate the mixing tank, in an embodiment, as shown in FIG. 11 and FIG. 12, the mixing tank 710 is provided with a gas jet device 730 in communication with the aeration inlet of the mixing tank 710. The gas jet device 730 includes a plurality of circular pipes 731 concentrically arranged, a communication pipe 732 connecting the plurality of circular pipes 731, and a gas inlet main pipe 733 in communication with the communication pipe 732. The gas inlet main pipe 733 is in communication with the aeration inlet of the mixing tank 710. Each circular pipe 731 is provided with a plurality of nozzles 7311. A diameter difference between adjacent two circular pipes is in a range of 5 cm to 10 cm. An aperture of each nozzle 7311 may be designed to be about 1 cm, and a spacing between adjacent two nozzles 7311 is in a range of 5 cm to 10 cm.

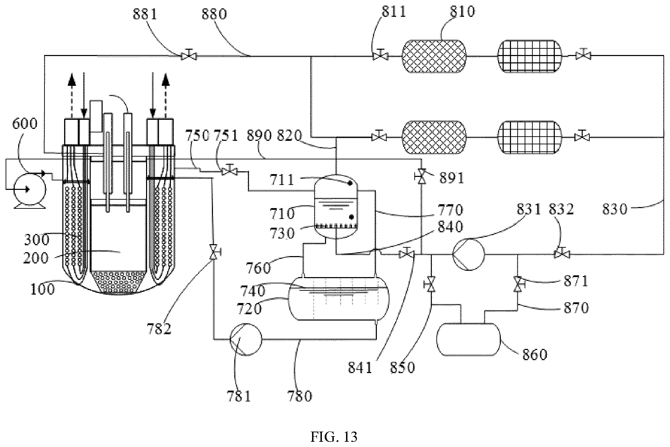

In order to better illustrate the first purification module 700 of the present application, referring to FIG. 13, the first purification module 700 includes a downflow pipeline 750 in communication with the nuclear reaction device and the mixing tank 710, and the downflow pipeline 750 may be provided with a downflow flow control valve 751. The mixing tank 710 is in communication with the settling tank 720 through a transferring pipeline 760. In addition, in order to balance an air pressure in the mixing tank 710 and the settling tank 720, a pressure balancing pipeline 770 is also provided between the mixing tank 710 and the settling tank 720. A plurality of pressure sensors 711 may be provided in the mixing tank 710. The pressure sensors 711 may be capable of calculating a liquid level of the coolant in the mixing tank 710 according to a pressure in the mixing tank 710. The pressure sensors 711 are electrically connected to a main control room. When the coolant level in the mixing tank 710 displayed in the main control room is low, the downflow flow control valve 751 can be adjusted to a greater value, and an upper flushing flow control valve 782 can be adjusted to a smaller value. The settling tank 720 is in communication with the nuclear reaction device through an upper flushing pipe 780. An upper flushing pump 781 and an upper flushing flow control valve 782 are provided on upper flushing pipe 780.

In this embodiment, when the first purification module 700 is in use, the downflow flow control valve 751 is opened, the upper flushing flow control valve 782 is opened, and the upper flushing pump 781 starts to work. The coolant in the nuclear reaction device enters the mixing tank 710 along the downflow pipeline 750, and the second purification module 800 aerates the mixing tank 710 along the aeration inlet of the mixing tank 710, so that the coolant in the mixing tank 710 is fully stirred. The radioactive element contained in the coolant in the mixing tank 710 enters the second purification module 800 along the aeration outlet of the mixing tank 710. The coolant in the mixing tank 710 enters the settling tank 720 along the transferring pipeline 760. The circular orifice plate 740 and the half-moon-shaped orifice plate in the settling tank 720 can block the coolant and cause the bubbles in the coolant to precipitate. The coolant in the settling tank 720 flows back to the nuclear reaction device along the upper flushing pipeline 780.

In addition, in order to better illustrate the second purification module 800, referring to FIG. 13, the second purification module 800 further includes a purification pipeline 820 in communication with the aeration outlet of the mixing tank 710 and an inlet of the filtration device 810, and an outlet of the filtration device 810 is in communication with an inlet of the first circulation pipeline 830. The filtration device 810 may include a plurality of groups of filters connected in series, and the inlet of the filtration device 810 and the outlet of the filtration device 810 may be provided with isolation valves 811, respectively, so as to control the gas flow to enter the filtration device 810 or to be discharged from the filtration device 810. The first circulation pipeline 830 is provided with a gas compression pump 831. An outlet of the first circulation pipeline 830 is in communication with the aeration inlet of the mixing tank 710 through the second circulation pipeline 840, and is in communication with a gas recovery tank 860 through a gas return pipeline 850. The gas recovery tank 860 replenishes gas to the first circulation pipeline 830 through a gas replenishment pipeline 870. A first flow control valve 871 may be provided on the gas replenishment line 870, and a second flow control valve 832 may be provided adjacent to the inlet of the first circulation pipeline 830. A third flow control valve 841 may be provided on the second circulation pipeline 840, and a fourth flow control valve 851 may be provided on the gas return pipeline 850.

In this embodiment, the gas compression pump 831 starts to operate, and the gas in the first circulation pipeline 830 may be the gas from the gas recovery tank 860 or the gas filtered in the filtration device 810. The gas compression pump 831 may supply the gas to the aeration inlet of the mixing tank 710 through the second circulation pipeline 840 or to the gas recovery tank 860 through the gas return pipeline 850. The entry of the gas into the mixing tank 710 causes the radioactive elements contained in the coolant in the mixing tank 710 to be released and enter the filtration device 810 along the aeration outlet of the mixing tank 710 through the purification pipeline 820. When the gas flow from the gas compression pump 831 is insufficient, the fourth flow control valve 851 can be closed and the first flow control valve 871 can be opened, that is, the gas is replenished to the gas compression pump 831 of the first circulation pipeline 830 through the gas recovery tank 860.

Further, in order to utilize the gas flow in the second purification module 800 to clean an interior of the nuclear reaction device, so as to take away more radioactive elements in a refrigerant, the second purification module 800 further includes a gas cavity downflow pipe 880 in communication with the nuclear reaction device and the inlet of the filtration device 810. A gas cavity downflow isolation valve 881 may be provided on the gas cavity downflow pipe 880. A gas cavity upper flushing pipe 890 is further provided between the outlet of the first circulation pipeline 830 and the nuclear reaction device. In addition, a fifth flow control valve 891 may be provided on the gas cavity upper flushing pipe 890.

When the second purification module 800 operates, the gas compression pump starts to work. The gas flow entering the first circulation pipeline 830 flows in three paths. The gas in the first path enters the gas recovery tank 860 along the gas return pipeline 850, that is, the gas flows to the gas recovery tank 860 to replenish gas to the gas compression pump later. When the gas pressure of the first circulation pipeline 830 is insufficient, the fourth flow control valve 851 can be closed and the first flow control valve 871 on the gas replenishment pipeline 870 can be opened, that is, the gas replenishment pipeline 870 can replenish the gas flow in the gas recovery tank 860 to the first circulation pipeline 830. The gas in second path enters the mixing tank 710 along the second circulation pipeline 840, and the gas in the mixing tank 710 is discharged to the filtration device 810 along the purification pipeline 820. The gas in third path enters the nuclear reaction device along the gas cavity upper flushing pipe 890 and flushes the nuclear reaction device.

Through the first purification module 700 and the second purification module 800 provided by the present application, the radioactive elements in the coolant in the nuclear reaction device can be better purified, so that the radioactive elements in the nuclear reaction device can be maintained at a relatively low level.

The above-mentioned embodiments do not constitute a limitation on the protection scope of the technical solution. Any modifications, equivalent replacements and improvements made within the spirit and principles of the above-mentioned embodiments shall be included within the protection scope of this technical solution.

The foregoing descriptions are merely specific embodiments of the present disclosure, but are not intended to limit the protection scope of the present disclosure. Any variation or replacement readily figured out by a person skilled in the art within the technical scope disclosed in the present disclosure shall all fall within the protection scope of the present disclosure.

## Claims

1. A nuclear reaction device, comprising:
a reaction container provided with a reaction cavity and a top cover configured to seal the reaction cavity;
a reaction module provided in the reaction cavity, the reaction module being configured to react in the reaction cavity and release heat; and
a heat exchange module provided in the reaction cavity and capable of absorbing the heat released by the reaction module, an inlet of the heat exchange module being configured to be in communication with a liquid supply system, and an outlet of the heat exchange module being configured to be in communication with a thermal driven system.

2. The nuclear reaction device according to claim 1, wherein the heat exchange module comprises at least one set of heat exchange tube bundle, an inlet of each set of heat exchange tube bundle is configured to be in communication with the liquid supply system, and an outlet of each set of heat exchange tube bundle is configured to be in communication with the thermal driven system.

3. The nuclear reaction device according to claim 2, wherein the heat exchange tube bundle is spirally wound around an outer wall of the reaction module.

4. The nuclear reaction device according to claim 2, wherein a plurality of sets of the heat exchange tube bundles are arranged circumferentially along an outer wall of the reaction module.

5. The nuclear reaction device according to claim 4, further comprising a positioning plate fixedly provided on the outer wall of the reaction module, wherein the positioning plate is provided with positioning holes having the same number as the number of the heat exchange tube bundles, so as to fix the plurality of sets of the heat exchange tube bundles, respectively.

6. The nuclear reaction device according to claim 5, further comprising a fixing assembly provided on the top cover, wherein the reaction module is located in the fixing assembly, the positioning plate is fixed by the fixing assembly, and the heat exchange tube bundles are provided on an outer wall of the fixing assembly.

7. The nuclear reaction device according to claim 6, wherein the fixing assembly comprises a hanging basket and a flange, the hanging basket is fixed on the top cover by the flange, the reaction module is located in the hanging basket, an outer wall of the hanging basket is provided with a connecting member to fix the positioning plate, and the heat exchange tube bundle is provided on the outer wall of the hanging basket.

8. The nuclear reaction device according to claim 7, wherein the reaction cavity is filled with a coolant, a side of the hanging basket away from the top cover is provided with a lower seal, the lower seal is provided with a first flow distribution hole, and the first flow distribution hole are in communication with the reaction cavity and the hanging basket;
the nuclear reaction device further comprises a coolant circulation module that drives the coolant in the reaction container to the positioning plate, and the positioning plate is provided with a plurality of second flow distribution holes through which the coolant flows.

9. The nuclear reaction device according to claim 8, wherein the reaction module comprises a reactor core provided in the hanging basket, a control rod assembly configured to react with the reactor core, and a driving mechanism configured to drive the control rod assembly to move.

10. A purification system comprising the nuclear reaction device according to any one of claims 1 to 9, a first purification module, and a second purification module;
wherein the first purification module is in communication with the nuclear reaction device and is configured to accommodate and circulate the coolant of the nuclear reaction device;
the second purification module is in circulation communication with the first purification module, and the second purification module aerates the first purification module and purifies fluid in the first purification module.

11. The purification system according to claim 10, wherein the first purification module comprises a mixing tank and a settling tank in communication with each other;
the mixing tank and the settling tank are in communication with the nuclear reaction device, respectively, the coolant of the nuclear reaction device is capable of flowing into the mixing tank and flowing into the nuclear reaction device from the settling tank, and an aeration inlet and an aeration outlet of the mixing tank are in communication with the second purification module, respectively.

12. The purification system according to claim 11, wherein the mixing tank is provided with a gas jet device in communication with the aeration inlet of the mixing tank.

13. The purification system according to claim 12, wherein the gas jet device comprises a plurality of circular pipes concentrically arranged, a communication pipe connecting the plurality of circular pipes, and a gas inlet main pipe in communication with the communication pipe, the gas inlet main pipe is in communication with the aeration inlet of the mixing tank, and each circular pipe is provided with a plurality of nozzles.

14. The purification system according to claim 11, wherein the settling tank is shaped as a tank body with two hemispherical ends and a cylindrical middle portion.

15. The purification system according to claim 11, wherein at least one circular orifice plate and a plurality of half-moon-shaped orifice plates are provided in the settling tank.

16. The purification system according to claim 11, wherein the second purification module comprises at least one group of filtration device.

17. The purification system according to claim 11, wherein the first purification module further comprises a downflow pipeline in communication with the nuclear reaction device and the mixing tank, a transferring pipeline and a balancing pipeline are provided between the mixing tank and the settling tank, the settling tank and the nuclear reaction device are in communication with each other through an upper flushing pipeline, and the upper flushing pipeline is provided with an upper flushing pump.

18. The purification system according to claim 17, wherein a pressure sensor is provided in the mixing tank, the pressure sensor is capable of calculating a liquid level of the mixing tank according to a pressure in the mixing tank, and the pressure sensor is electrically connected to a main control room.

19. The purification system according to claim 16, wherein the second purification module further comprises a purification pipeline in communication with the aeration outlet of the mixing tank and an inlet of the filtration device, and an outlet of the filtration device is in communication with an inlet of the first circulation pipeline;
the first circulation pipeline is provided with a gas compression pump, an outlet of the first circulation pipeline is in communication with the aeration inlet of the mixing tank through a second circulation pipeline and is in communication with a gas recovery tank through a gas return pipeline, and the gas recovery tank replenishes gas to the first circulation pipeline through a gas replenishment pipeline.

20. The purification system according to claim 19, wherein the second purification module further comprises a gas cavity downflow pipe in communication with the nuclear reaction device and the inlet of the filtration device, and a gas cavity upper flushing pipe is further provided between the outlet of the first circulation pipeline and the nuclear reaction device.
